# EUROPEAN PATENT APPLICATION

(11) **EP 1 535 715 A1**
(43) Date of publication of application: **01.06.2005**
(21) Application number: 03741139.4
(22) Date of filing: 30.06.2003
(51) Int. Cl.: B29C 45/00, B29K 105/04

(54) **METHOD OF MANUFACTURING RESIN MOLD PRODUCT**

(30) Priority: 05.07.2002 JP 2002197120; 04.04.2003 JP 2003101965
(71) Applicant: Suzuka Fuji Xerox Co., Ltd., Suzuka-shi, Mie 519-0393 (JP)
(72) Inventor: SUZUKI, Yasuhiro, Suzuka Fuji Xerox Co., Ltd., Suzuka-shi, Mie 519-0393 (JP)
(74) Representative: VOSSIUS & PARTNER
(86) International application number: PCT/JP2003/008332
(87) International publication number: WO 2004/005001

(57) **Abstract**

The object of the present invention is to provide a method for manufacturing a resin molded article with a shrinkage ratio that fluctuates little, even if its molding condition(s) is(are) changed, providing a resin molded article with an accurate size.

To attain this object, a mold whose cavity is designed to set the shrinkage ratio of the objective resin molded article into a predetermined range is prepared, and the resin, melted by heating at a temperature higher than 160°C, is injected into said cavity of said mold, after which a further fluid is injected into said melting resin, at a predetermined pressure.

## Description

### FIELD OF THE INVENTION

The present invention relates to a method for manufacturing a resin molded article made of a thermoplastic resin.

### BACKGROUND OF THE INVENTION

The shrinkage ratio of a solid resin molded article is not uniform so that a mold has been designed averaging the ratio of partial shrinkage based upon the present data available.

On the other hand, in a case where a solid resin molded article is made of a recycled resin, such as that obtained by the collecting, smashing and pelltizing of the discarded resin molded articles made of thermoplastic resins, various resins whose recycle times, grades, and makers differ, and the like, are mixed together, and in a case where a recycle aid agent is added to said recycle resin to recover the degradation of said recycle resin's mechanical properties due to repeated recycles, it is recognized that the molding shrinkage ratio of the molded article varies more widely than in a case where the virgin resin has been used.

To manufacture the mold for production of the resin molded article, first, a resin molded article is pre-molded using an experimental tentative mold, the size of said trial resin molded article being determined, and further, the difference between the size(s) of the part(s) of the said trial resin molded article, and the size(s) or the part(s) of the objective resin molded article is(are) determined, the part(s) of the resin molded article having size variations with the normal resin molded article being amended in the secondary mold design. Said procedures are repeated until a normal resin molded article is produced.

Nevertheless, since the molding shrinkage ratio is determined by using average the numerical values of parts of the resin molded article, the size of the part having a greater shrinkage ratio than that of the average numerical value, namely, the part over shrinking in molding, and becoming smaller than the normal size.

On the other hand, the size of a part having a smaller shrinkage ratio than its average numerical value, namely the part shrinking little in molding, becomes larger than its normal size. In a case of where an article is molded using recycle resin, said problems may become easily noticeable. The causes of said differences between normal numerical values may be such as a difference in the fluidity of a resin material, or its production lot, the maker, grade, whether the recycle resin material has been used, whether it has been mixed or unmixed, whether a recycle aid agent, flame retardant, or quality improving agent, or the like has been added or not, variations in the inner surface temperature of the mold cavity, the cooling time of the resin molded article in the mold (the time to correct the resin molded article), and the difference in resin density effecting the hold pressure in the mold, and further, cases where the molding condition(s) such as injection speed, injection pressure, holding pressure, or the like is(are) reluctantly changed to avoid defects such as short molding, whitening, cracking, silver streaking, or the like, said defects being caused by the effect of the atmosphere in the molding place (temperature, humidity, atmospheric pressure, gravity, or the like), as well as differences in the shapes and thicknesses of the products.

For instance, in a case where the thickness of the product varies, the shrinkage ratio of a solid resin molded article made of ABS will be 5.0/1000 for a thickness of 2mm, 5.5/1000 for thickness of 3mm, and 5.5/1000 for thickness of 4mm.

As described above, in a case where there is a fluctuation in the shrinkage ratio during trial manufacturing of the mold, there is a problem in that the mold should be modified at great expense or the design plan (sizes in the plan) should be modified. Modifying of the design plan often involves the modifying of parts assembled to the product, these specifications being difficult to change after the production of a resin molded article has started, in a case where said problem occurs, there is a problem in that production should be stopped to modify said mold, or said resin molded article should be shaped by a shaving machine, or the like.

The present invention is provided to solve said problem, and to provide a method for manufacturing a resin molded article, more specifically, the object of the present invention is to prevent major fluctuations in shrinkage ratio, and ensure substantially constant shrinkage ratio, without variations in the size of said resin molded article, even when the molding conditions have changed.

### DISCLOSURE OF THE INVENTION

A method for manufacturing a resin molded article of claim 1 relates to a method for manufacturing a resin molded article made of an acrylonitrile-butadiene-styrene copolymer, or a polymer alloy or polymer blend containing said acrylonitrile-butadiene-styrene copolymer, comprising; the preparation of a mold whose cavity is designed to set the shrinkage ratio of said resin molded article into a range of between 4.5/1000 and 6.6/1000, the injecting of said acrylonitrile-butadiene-styrene copolymer, or said polymer alloy or polymer blend containing said acrylonitrile-butadiene-styrene copolymer, into said mold cavity, said copolymer, or said polymer alloy or polymer blend, being melted by heating at a temperature higher than 160°C, and then the injecting of a fluid at a pressure higher than the atmospheric pressure during, or after the injection of said copolymer, or said polymer alloy or polymer blend.

A method for manufacturing a resin molded article of claim 2 relates to a method for manufacturing a resin molded article made of a high impact polystyrene, which is a polymer blend of a styrene graft butadiene copolymer, and a styrenic polymer, or a polymer alloy or polymer blend containing said high impact polystyrene, comprising; the preparation of a mold whose cavity is designed to set the shrinkage ratio of said resin molded article into a range of between 4.5/1000 and 6.7/1000, the injecting of said high impact polystyrene, or said polymer alloy or polymer blend containing said high impact polystyrene, into said mold cavity, said high impact polystyrene, or said polymer alloy or polymer blend containing said high impact polystyrene, being melted by heating at a temperature higher than 160°C, and then the injecting of a fluid at a pressure higher than the atmospheric pressure during, or after the injection of said high impact polystyrene, or said polymer alloy or polymer blend containing said high impact polystyrene.

A method for manufacturing a resin molded article of Claim 3 relates to a method for manufacturing a resin molded article made of a modified polyphenylene ether, or a polymer alloy or polymer blend containing said modified polyphenylene ether, comprising; the preparation of a mold whose cavity is designed to set the shrinkage ratio of said resin molded article into a range of between 4.5/1000 and 6.5/1000, the injecting of said modified polyphenylene ether, or said polymer alloy or polymer blend containing said modified polyphenylene ether, into said mold cavity, said modified polyphenylene ether, or said polymer alloy or polymer blend containing said modified polyphenylene ether, being melted by heating at a temperature higher than 175°C, and then the injecting of a fluid at a pressure higher than the atmospheric pressure during, or after the injection of said modified polypherylene ether, or said polymer alloy or polymer blend containing said modified polyphenylene ether.

A method for manufacturing a resin molded article of Claim 4 relates to a method for manufacturing a resin molded article made of a polymer alloy or polymer blend containing a polycarbonic ester derived from an aromatic dihydroxy compound and polystyrenic resin, comprising; the preparation of a mold whose cavity is designed to set the shrinkage ratio of said resin molded article into a range of between 4.5/1000 and 6.5/1000, the injecting of said polymer alloy or polymer blend containing said polycarbonic ester derived from said aromatic dihydroxy compound and polystyrenic resin, said polymer alloy or polymer, blend being melted by heating at a temperature higher than 175°C, and then the injecting of a fluid at a pressure higher than the atmospheric pressure during, or after the injection of said polymer alloy or polymer blend.

A method for manufacturing a resin molded article of Claim 5 relates to a method wherein, in accordance with Claim 4, said styrenic resin is
A: A copolymer of vinyl cyanide and styrenic monomer containing a graft rubber in which a graft copolymer of vinyl cyanide and styrenic monomer containing dienic rubber and/or acrylic rubber and/or olefinic rubber is (are) compounded.
B: A graft copolymer of a styrenic polymer and a styrenic monomer containing a dienic rubber and/or an acrylic rubber and/or an olefinic rubber.
C: A copolymer of a styrenic monomer in which a graft copolymer of a dienic rubber and/or an acrylic rubber and/or definic rubber and a styrenic monomer is(are) compounded.

A method for manufacturing a resin molded article of Claim 6 relates to a method wherein, in accordance with Claims 1 to 5, said fluid is injected into said mold cavity from the injecting nozzle of an injection molding machine.

A method for manufacturing a resin molded article of Claim 7 relates to a method wherein, in accordance with Claims 1 to 5, said fluid is injected into said molded article by using one or more injecting needle(s) and/or injecting nozzle(s) through a sprue runner.

A method for manufacturing a resin molded article of Claim 8 relates to a method wherein, in accordance with Claims 1 to 5, said fluid is directly injected into said molded article by using one or more injecting needle(s) and/or injecting nozzle(s).

A method for manufacturing a resin molded article of Claim 9 relates to a method for manufacturing a resin molded article made of an acrylonitrile-butadiene-styrene copolymer, or a polymer alloy or polymer blend containing said acrylonitrile-butadiene-styrene copolymer, comprising; the preparation of a mold whose cavity is designed to set the shrinkage ratio of said resin molded article into a range of between 5.5/1000 and 7.5/1000, and the injecting of said acrylonitrile-butadiene-styrene copolymer, or said polymer alloy or polymer blend containing said acrylonitrile-butadiene-styrene copolymer, into said mold cavity, said copolymer, or said polymer alloy or polymer blend, containing a blowing agent in an amount of less than 5% by weight, and being melted by heating at a temperature higher than 160°C.

A method for manufacturing a resin molded article of Claim 10 relates to a method for manufacturing a resin molded article made of a high impact polystyrene which is a polymer blend of a styrene graft butadiene copolymer and a styrenic polymer, or a polymer alloy or polymer blend containing said high impact polystyrene, comprising; the preparation of a mold whose cavity is designed to set the shrinkage ratio of said resin molded article into a range of between 5.5/1000 and 7.3/1000, and the injecting of said high impact polystyrene, or said polymer alloy or polymer blend containing said high impact polystyrene, into said mold cavity, said high impact polystyrene, or said polymer alloy or polymer blend, containing a blowing agent in an amount of less than 5% by weight, and being melted by heating at a temperature higher than 160°C.

A method for manufacturing a resin molded article of Claim 11 relates to a method for manufacturing a resin molded article made of a modified polyphenylene ether, or a polymer alloy or polymer blend containing said polyphenylene ether, comprising; the preparation of a mold whose cavity is designed to set the shrinkage ratio of said resin molded article into a range of between 5.5/1000 and 7.5/1000, and the injecting of said modified polyphenylene ether, or said polymer alloy or polymer blend containing said modified polyphenylene ether into said mold cavity, said modified polyphenylene ether, or said polymer alloy or polymer blend, containing a blowing agent in an amount of less than 5% by weight, and being melted by heating at a temperature higher than 175°C.

A method for manufacturing a resin molded article of Claim 12 relates to a method wherein, in accordance with Claims 1 to 11, said resin being injection molded is a recycled resin or a mixture of a virgin resin and a recycled resin in which said recycled resin is contained in an amount of more than 1% by weight.

### BRIEF DESCRIPTION OF THE DRAWINGS

Fig. 1 is a section view of a needle used in the present invention to inject a fluid into a resin molded article.
Fig. 2 is a section view of a needle used in the present invention to inject a fluid into a resin molded article.
Fig.3 is a perspective view of the resin molded article to illustrate the present invention.
Fig.4 is a section view of an embodiment of an open nozzle attached to the top of the heating cylinder of a molding machine.
Fig.5 is a section view of an embodiment of a shut-off nozzle attached to the top of a heating cylinder of a molding machine.
Fig.6 is a section view of an embodiment of a shut-off nozzle attached to the top of a heating cylinder of a molding machine.
Fig.7 is a section view of an embodiment of a shut-off nozzle attached to the top of a heating cylinder of a molding machine.
Fig. 8 is a section view of an embodiment of a shut-off nozzle attached to the top of a heating cylinder of a molding machine.
Fig. 9 is a section view of an embodiment of a shut-off nozzle attached to the top of a heating cylinder of a molding machine.
Fig. 10 is a section view of a preferable embodiment of a shut-off nozzle attached to the top of a heating cylinder of a molding machine.
Fig. 11 is a section view of a preferable embodiment of a shut-off nozzle attached to the top of a heating cylinder of a molding machine.
Fig. 12 is a section view illustrating the motion of a shutter type shut-off nozzle attached to the top of a heating cylinder of a molding machine.
Fig.13 is a section view illustrating the motion of a shutter type shut-off nozzle attached to the top of a heating cylinder of a molding machine.
Fig. 14 is a section view illustrating the motion of a rotor valve type shut-off nozzle attached to the top of a heating cylinder of a molding machine.
Fig. 15 is a section view illustrating the motion of a rotor valve type shut-off nozzle attached to the top of heating cylinder of a molding machine.

### EXPLANATION OF CODES

1. gas inlet
2. gas inlet

### PREFERRED EMBODIMENT

### (Gas assist, Liquid assist, Molding Method)

The practicable molding methods applied in the present invention are the gas assist molding methods, such as AGT, H²M, RFM, CGM, provided by Asahi Chemical Industry Co., Ltd., Sympress provided by A&M Styrene Co., or Mitsubishi Gas Chemical Co., Inc., GIM provided by Idemitsu Petrochemical Co., Ltd., Airmold provided by Battenfeld Co., (Germany), GAIN Technology, Nitorojection (sejour) provided by DPM (USA), PFP method provided by Nippon Steel Chemical Co., Ltd. GPI, Contool, New-SF, or the like, and liquid assist molding in which a high pressure liquid is applied instead of gas, such as HELGA, or the like.

Besides said methods, a gas assist method in which the pressurized gas (GCP) is injected into the cavity of a mold, exerting high pressure therein, making the foamed resin melt in the cavity, or the blow molding method (liquid molding) which uses a liquid sold by BATTENFELD CO., or the like, are also practicable in the present invention.

### (Blowing Molding Method)

Blowing molding is a method in which melting resin is foamed physically or chemically during thermoplastic resin molding such as injection molding, extrusion molding, blow molding, or the like. Besides these methods, the blowing molding includes the UCC method, SS(short, short) method, Gas counter pressure method (GCP method), TAF method, USM method (USA), Co-SF method (Sandwich method), by Battenfeld Co., (Germany), the New SF method, a method provided by Allied Chemical Co., a method provided by Ex-Cell-O CO., Mucell(trade name) method in which a gas in its critical state, such as a critical state CO₂ is applied, and

Amotec(trade name), or the like, are practicable in the present invention.

Further, expansion injection molding, in which a gas in its critical state is introduced into the heating cylinder of an injection molding machine, and mixed with a melted resin, keeping its critical state, said gas acting as a lubricant, after which the resulting mixture is injected into the cavity of the mold to create a resin molded article in which fine cells are formed, as is described in TOKKAIHEI 11-263858, TOKKAIHEI 10-76560, TOKKAIHEI 11-230528, TOKKAI 2001-1379, TOKKAI 2001-9882, TOKKAIHEI 08-85129, TOKKAI 2000-355024 and TOKKAI 2000-84968, expansion injection molding, in which carbon dioxide is used as the GCP in said GCP method and is dissolved in a melted resin, then injected into the cavity of the mold, with improved fluidity, to form cells in the resin molded article, and expansion injection molding, in which carbon dioxide is used as GCP and at the same time carbon dioxide in the critical state is used as the lubricant, or the like are also practicable in the present invention. Still further, the method for applying said expansion molding and said gas assist molding together is also practicable in the present invention.

In a case where the gas in its critical state is applied in the molding, the most suitable gas may be carbon dioxide gas (its critical temperature 31.1°C, critical pressure 75.2kg/cm), nitrogen also being applicable.

To introduce gas in its critical state, in a case where carbon dioxide is compressed at a temperature and pressure exceeding its critical point, and said gas is mixed with a melted resin in the extruder or the heating cylinder of the injection molding machine, or a case where carbon dioxide below its critical point is introduced into the heating cylinder of the injection molding machine, after which said gas is put in its critical state by the temperature and pressure in said heating cylinder, the introduction of said gas to the nozzle of the injection molding machine, and mixing of said gas and melted resin by injecting pressure, or the like, are applicable. In particular, in a case where the mixing nozzle is used, said gas is introduced into the rear part of said mixing nozzle, to mix said gas and said melted resin.

Further, carbon dioxide gas can be introduced (blown) into the extruder or heating cylinder of the injection molding machine, after which said gas is put in its critical state by the temperature and pressure therein, mixing said gas in the melted resin.

In these methods, the case where the gas in its critical state is introduced into the extruder or heating cylinder of the injection molding machine, in which the melted resin and said gas are mixed with a screw is the most preferable, since a large volume of said gas can be introduced, and uniformly mixed into said melted resin, to produce a foamed resin molded article having a high expansion ratio.

In the present invention, the term "fluid" means any kind of fluid, such as gas or liquid, being applied to various molding methods in the present invention.

### (Gas assist molding method)

The gas assist molding method is a method in which high pressure is exerted on a melted resin in the cavity of a mold with a high pressure gas, said high pressure being exerted from within melted resin or from the outside of said melted resin, with said gas being introduced through the nozzle and/or the runner of the molding machine, and/or directly into the resin molded article.

In a case where said gas is introduced through a nozzle, the mold can be used as it is without any modification. The method in which said gas is introduced through the runner is adopted in a case where said gas is difficult to inject directly into the molded article, and in a case where said gas is introduced directly into the molded article, the injection pressure of the gas can be set to be lower than in a case where said gas is introduced through the nozzle or the runner, so that a resin molded article having a high dimension of accuracy, with less warping and deformation, can be obtained.

In a case where said gas is injected through the runner or directly into the resin molded article, a needle pin, a check ball equipped nozzle(sympress nozzle), or the like can be used, as described in JP-2866240, TOKKOUHEI 07-29338, TOKKOUHEI 07-67716, JP-2874835, JP-2884455, JP-2724936, JP-3241422, TOKKAIHEI 10-217287, TOKKAIHEI 10-217272, JP-2949779, JP-2654959, JP-3003164, TOKKAIHEI 11-48277, JP-3059225, JP-2584632, JP-3166440, JP-2825937, TOKKOUHEI 07-55512, JP-2776244, JP-3189260, JP-2971198, JP-2971199 and TOKKOUHEI 07-12619 etc.

The tip of the needle pin has an acute angle of less than 100° and is easily heated by the hot melted resin, and further, has a double tube structure, with gas being released from the tip opening. As described above, the tip of the needle pin is set to be sharp, so that the melted resin forms a thin layer of the solidified resin akin in the cavity of the mold, with said thin skin layer being easily broken thorough at a low gas pressure. Accordingly, gas is easily injected into the resin molded article.

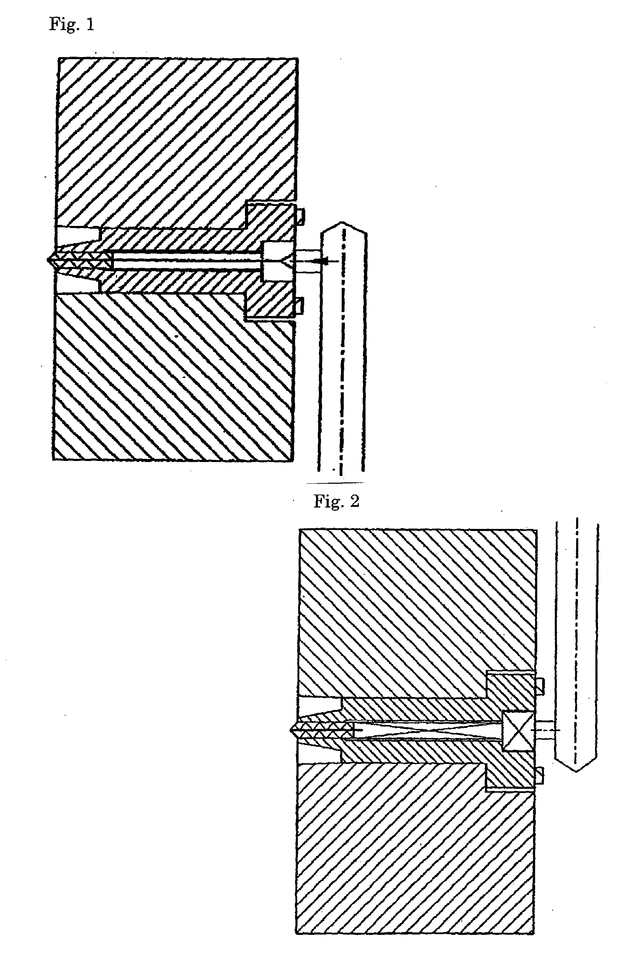

Figs. 1 and 2 show an embodiment of the needle injecting gas into the resin molded article.

Said needles 11, 21 have tips 12, 22, each having an acute angle of less than 100° , with said needle 11, being divided into two parts, 11A, and 11B by a slit 13, along its axis, as shown in Fig. 1, with the tip 22 side of said needle 21, being partially divided into two parts 22A, 22B by a slit 23 along its axis as shown in Fig.2.

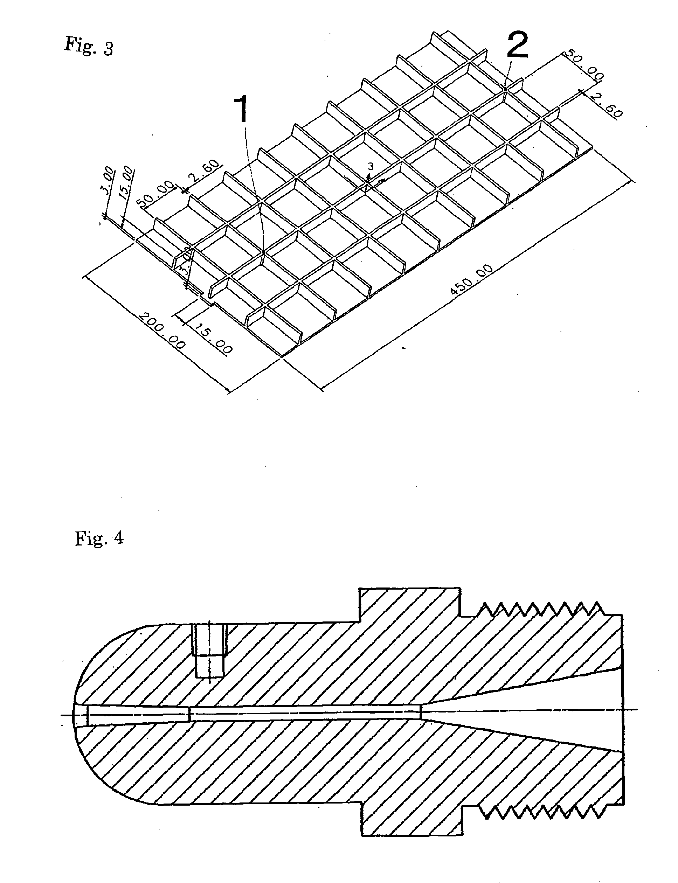

Using the needle described in JP-2724936 (A needle), the needle shown in Fig.1 (B needle) and the needle shown in Fig.2 (C needle), and injecting gas through the nozzle of the molding machine, or the spur·runner, or directly into the molded article, the molded articles JP-2724936 shown in Fig.3 were molded. In said molded article JP-2724936, gas was injected into a gas inlet 1. The pressure of the gas injection and the plan degree of said molded article are shown in Table 1.

**Table 1**

| Gas injecting manner & type of needle | From the nozzle | From the runner | Directly to the molded article | | |
|---|---|---|---|---|---|
| | | | A needle | B needle | C needle |
| Gas injection pressure(MPa) | 35 | 26 | 15 | 12 | 12 |
| Plan degree (m/m) | 2.5 | 1.8 | 0.6 | 0.4 | 0.4 |

### (Molding conditions)

Resin material ABS resin (Styrac 191 : Asahi Chemical Industry Co., Ltd.)
Melted resin temperature 240°C
Gas injection position from the gas inlet 1
Gas injection start: The gas injection was started 0.2 sec. after the resin had been completely injected into the mold.
Gas injection time: 15 sec.
Holding time after the gas injection : 10 sec.

Referring to Table 1, in the cases of B needle and C needle, because gas is injected from each needle's tip, a lower gas pressure can be applied, resulting in a recognizable improvement in the plan degree of the molded article, which is a barometer by which its quality is judged.

In a case where gas was injected from both gas inlets 1 and 2, in said molded article shown in Fig.3, the gas pressure could be lowered to 10 MPa, confirming a further improvement of about 0.3 in its plan degree. Considering said result, it has been concluded that two or more gas inlets are preferably provided.

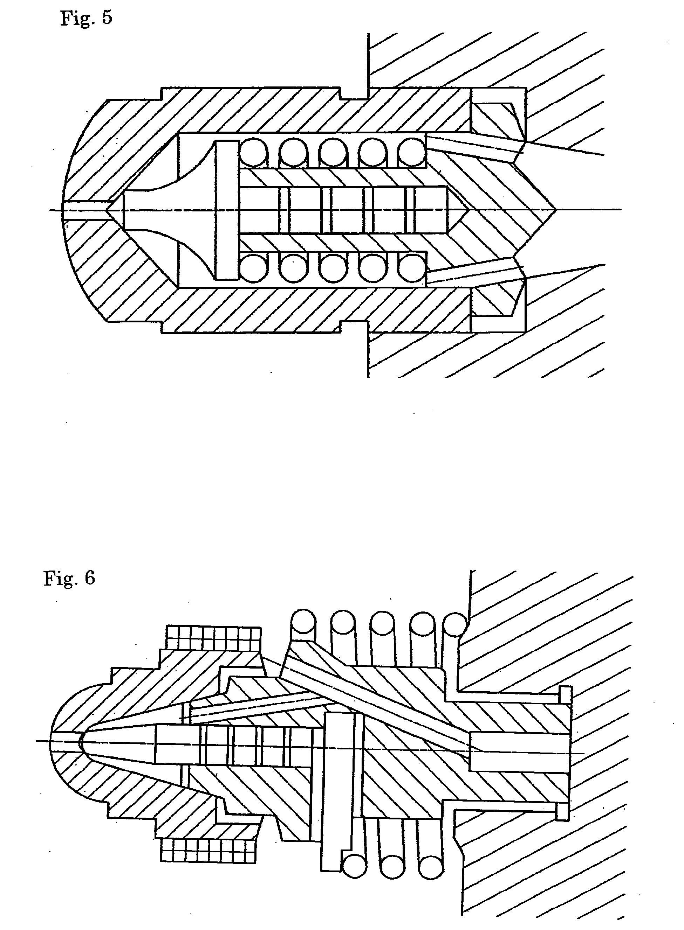

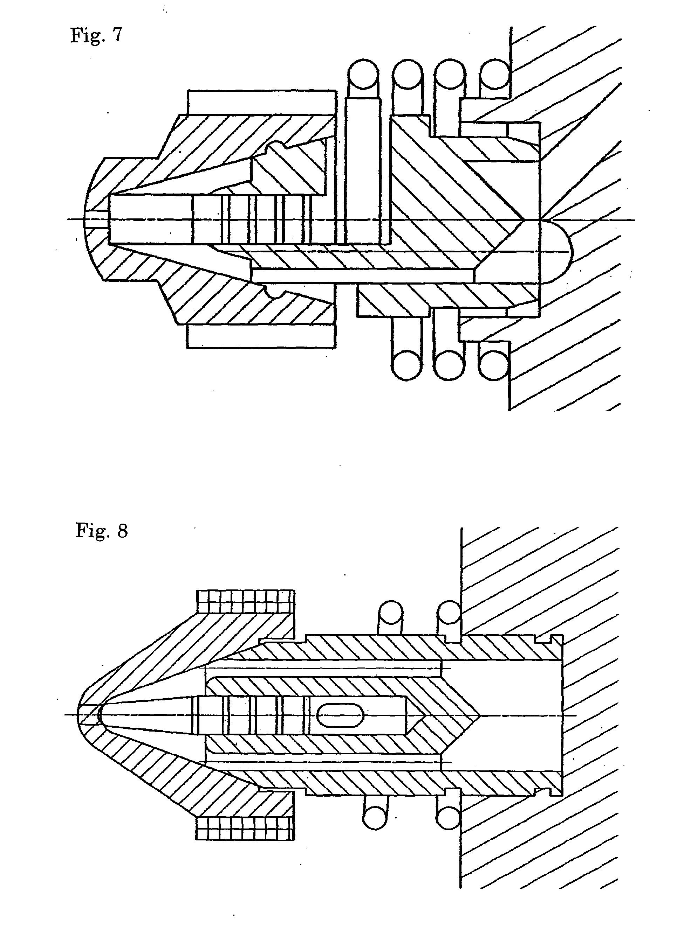

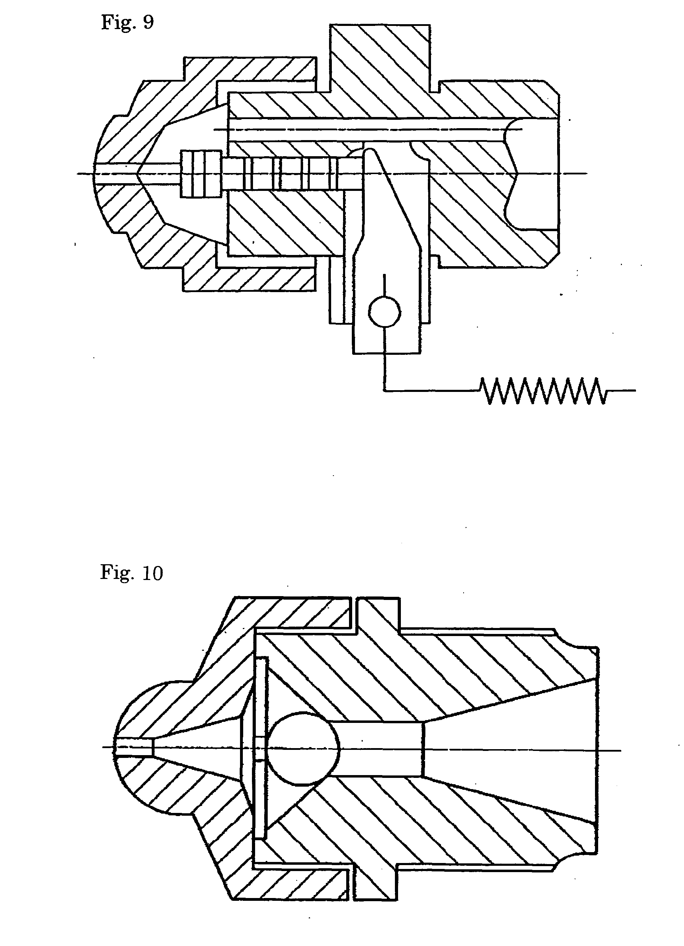

In a case where an open nozzle, as shown in Fig.4, is used at the tip of the heating cylinder of the molding machine, the gas is injected thorough the sprue runner and/or directly to the molded article, there exists a problem in that high pressure gas injected into a molded article, passes through the open nozzle, reaching the heating cylinder of the molding machine, leading to fears that the melted resin in the heating cylinder will spout forth from the hopper into which the resin material has been put. To solve this problem, oil pressure, air pressure or spring type shut-off nozzles, as shown in Figs.5 to 9 are generally used. Nevertheless, said shut-off nozzles have other problems in that gas regurgitates from the needle opening in a case where the injection pressure of the gas becomes too high.

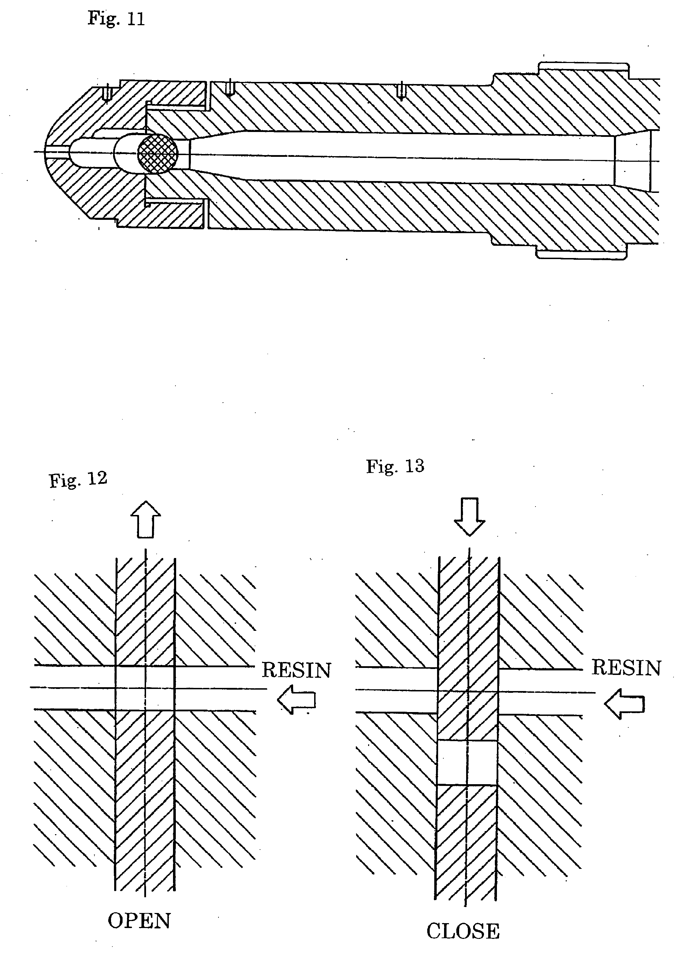

Accordingly, it is most preferable to use a nozzle equipped with the ball check mechanism for the heating cylinder, as shown in Fig. 10 or 11, said nozzle being used in the high pressure gas device, and having a structure similar to a check valve. In said ball check mechanism, a ball placed in said mechanism, moves when gas is injected through the sprue·runner, or the cavity of the mold, not the nozzle and closes the nozzle as gas pressure increases, the sealing effect of said ball increasing, to solve said problem.

In said gas assist molding method and said expansion molding method, the temperature of the melted resin is set to be about 5 to 10 °C higher than in the case of solid molding, improving the fluidity of the melted resin, so that excellent moldability (aptitude for molding) is ensured, and the quality (dimensional accuracy, appearance) of the resin molded article is improved.

To obtain a preferable hollow structure or foamed structure, the temperature of the melted resin is set to be 200°C to 285°C in a case of a styrenic resin containing PS in an amount of more than 50% by weight, and 210°C to 320°Cin a case of a styrenic resin containing AS in an amount of more than 50 % by weight. On the other hand, the temperature of the mold is preferably set to be below 50°C considering productivity. In a case where the temperature of the surface of the mold is set to be over 50°C, or beyond 60°C, the appearance of said resin molded article will be improved, but productivity (the cooling speed of the melting resin) will decline.

### (Thermoplastic resin)

Any kind of thermoplastic resin used as resin material or in the resin molded article is used in the present invention.

Said thermoplastic resin may be such as a polystyrenic resin produced by the polymerization of a styrenic monomer and said polystyrenic resin, for example a polystyrene(PS), high impact polystyrene(HIPS), acrylonitrile-styrene copolymer resin (AS), acrylonitrile-butadiene-styrene copolymer or the like, a polyolefin resin such as polyethylene, polypropylene, or the like, an engineering plastic such as polyphenylene ether (PPE), polycarbonate (PC), polyamide(PA), polysulphone (PSF), polyetherimide(PEI), polymethylmethacrylute(PMMA), or the like, a polyester resin such as polyethylenetelephthalate (PET), polybutylenetelephthalate (PBT), or the like, a vinyl resin such as polyvinylchloride (PVC), or the like. Two or more of said thermoplastic resins may be mixed together in the present invention.

A useful thermoplastic resin in the present invention may be such as a polystyrenic resin, acrylonitrile-styrene copolymer resin, PPE, a resin containing a graft copolymer in which a dienic rubber such as butadiene rubber, isoprene rubber, chloroprene rubber or the like, or an olefinic rubber, acrylic rubber, or the like comprises the trunk such as ABS, AAS(ASA), AES, EPM-AS, EPDM-AS, a resin containing a graft copolymer in which said dienic rubber, olefinic rubber, acrylic rubber, or the like comprises the trunk such as HIPS, modified PPE containing ABS and/or HIPS, a mixture, or a polymer blend, or a polymer alloy, containing PP, ABS, and/or HIPS, or the like, and PC, PA, PBT, PSF, PEI, or the like.

Said thermoplastic resin is precisely described below.

### (Styrenic resin)

The styrenic resin of the present invention is a resin containing styrenic monomer in an amount of more than 25 % by weight, and said styrenic resin may be such as a homopolymer of a styrenic monomer, a copolymer of two or more kinds of styrenic monomers, a copolymer of one or more kinds of styrenic monomer(s), and one or more kinds of other monomer(s) which can copolymerize with a styrenic monomer, a graft polymer in which one or more kinds of styrenic monomer(s) is(are) grafted to said dienic rubber, a micro blend or a polymer blend of said styrenic resin and said dienic rubber, or the like.

The typical styrenic resin used in the present invention may be such as a polystyrene which is a homopolymer of a styrenic monomer, high impact polystyrene which is a polymer blend of grafted rubber in which styrene is grafted with rubber such as dienic rubber, acrylic rubber, or olefinic rubber, acrylonitrile-styrene copolymer(AS), styrene-butadiene copolymer, styrene- α -styrene copolymer, styrene-maleic andydride copolymer, styrene-methylmethacrylate copolymer, styrene-ethylene copolymer, styrene-ethylene-propylene-butadiene copolymer, a blendpolymer of grafted rubber in which an acrylonitrile monomer and a styrene monomer are graft copolymerized to dienic rubber, acrylic rubber, or olefinic rubber and acrylonitrile styrene copolymer, ACS which is a mixture of chlorinated polyethylene and acrylonitrile-styrene copolymer, AES which is a mixture of grafted rubber in which acrylonitrile monomer and a styrene monomer are graft copolymerized to olefinic rubber and an acrylonitrile-styrene copolymer, ASiS which is a polymer blend of acrylonitrile-dimethylsiloxane-styrene copolymer and acrylonitrile-butadiene-styrene copolymer, or the like.

### (Polyphenyleneether (PPE) resin

A typical PPE resin used in the present invention may be such as a poly (2,6-dimethyl-1,4-phenylene ether) produced by the oxidation polymerization of 2,6-xylenol using a copper catalyst, and besides said poly (2,6-dimethyl-1,4-phenylene ether), copolymer of 2,6-dimethyl-1,4-phenylene ether and 2,3,6- trimethyl-1,4-phenylene ether, copolymer of 2,6-dimethyl phenol and 2,3,6-trimethyl phenol, or the like also being used in the present invention. Further, a PPE resin which is modified by styrenic resin and/or amide resin or the like are used in the present invention.

### (Polycarbonate resin (PC resin))

In the present invention, PC resin can be singly used as the thermoplastic resin for molding,but PC resin is mainly used as a material for a polymer alloy or polymer blend, in which PC resin is mixed in with said styrenic resin or PPE resin.

Any kind of PC resin (Aromatic PC resin) which is a polycarbonate, derived from an aromatic dihydroxy compound can be used in the present invention.

Said aromatic dihydroxy compound may be such as a 2,2-bis(4-hydroxyphenyl) propane(Bisphenol A), tetramethyl bisphenol A, tetrabromobisphenol A, bis(4-hydroxyphenyl)-p-diisopropylbenzene, hydroquironem, resorcinol, 4,4'-dihydroxydiphenyl, or the like, and commonly a bis(4-hydroxy phenyl) alkanic dihydroxy compound is selected as said aromatic dihydroxy compound, bisphenol A or a combination of bisphenol A and other aromatic dihydroxy compound also being especially preferable.

### (Polyolefine resin)

Poly olefin resin is a resin produced by the polymerization of one or more kinds of α -olefin(s) using a radical initiator, metal oxide catalyst, Ziegler-Natta catalyst, Kaminsty catalyst, or the like, and two or more of said polyolefine resins may be mixed together in the present invention.

As α -olefins, straight chain, branched or cyclic olefine having a polymerizable double bond at its α -position and 2 to 8 carbons are selected. Concretely *α* -olefine includes ethylene, and propylene.

Other monomer(s) may be copolymerized with α -olefine in said polyolefine resin used in the present invention. These may be such as an α - β unsaturated organic acid or derivative thereof, such as an acrylic acid, methacrylic acid, maleic acid, itaconic acid, a methyl acrylate, ethyl acrylate, methyl methacrylate, maleic amhydride, allyl maleicimide alkyl maleicimide or the like, vinyl ester such as vinyl acetate, vinyl butyrate or the like, an acromatic vinyl compound such as styrene, methyl styrene, or the like, a vinyl silane such as vinyl trimethylmethoxy silane γ -methacryloxy propyltrimethoxy silane, or the like, and further, a small amount of unconjugated diene compound such as 1,4-hexadiene, 4-methyl-1, 4-hexadiene, 5,4-methyl-1,4-hexadiene, dicyclopantadiene, ethylidenenorbornern(4-ethylidene-2-norbornen) or the like may be copolymerized with α -olefine.

A typical polyolefine resin may be such as a polyethylene, polypropylene, ethylene-vinyl acetate copolymer, ethylene-acrylic acid copolymer, or the like. Said polyolefine resin is used singly or mixture of two or more of said polyolefine resins is used as molding material, and further, said polyolefine resin may be mixed with other thermoplastic resin such as PS, HIPS, AS, ABS resin, PPE resin, or the like.

### (Polymer blend or Polymer alloy)

A precise description of the thermoplastic resin for molding, used in the present invention, was made above, and two or more kinds of said thermoplastic resin may be mixed together to prepare a polymer blend or polymer alloy Said polymer blend or polymer alloy is prepared by being mixed with the screw of the extruder.

To improve impact resistance, a rubber such as, dienic rubber, olefinic rubber, acrylic rubber, more precisely NR, BR, SBR, STR, IR, CR, CBR, IBR, IBBR, IIR, an acrylic rubber polysulfide rubber, urethane rubber, polyether rubber, epichlo rodydrin rubber, chorobutyl rubber, hydrogenated nitrile rubber, fluoro rubber or the like, a vinyl resin such as an ethylene-vinyl acetate copolymer, acrylic resin, ethylene-ethylacrylate copolymer, polyvinyl chloride or the like, or a polynorbornene or the like may be mixed in said thermoplastic resin for molding.

In a case where said rubber has poor compatibility with the resin into which said rubber is mixed, to improve compatibility, the monomer(s) comprising said resin may be graft and/or random and/or block copolymerized.

Further, to improve the impact resistance of said thermoplastic resin, a thermoplastic elastomer(TPE) may be added to said resin. Said thermoplastic elastomer has the property of the vulcanized rubber at room temperature, but also has a thermoplastic property, so that said thermoplastic elastomer can be molded by heating and consists of hard segment and soft segment. Said thermoplastic elastomer may be such as a urethane elastomer, styrenic elastomer, vinyl elastomer, or polyester elastomer, or the like.

### (Blowing agent)

The foaming method comprises a physical method and a chemical method, said physical method including a method in which foaming is achieved by a mechanical stirring, and a method in which a volatile solvent is mixed into the melted resin and then said solvent is evaporated by heating for foaming, while said chemical method includes a method in which foaming is achieved by gas from a chemical reaction of the blowing agent. Generally, a blowing agent is used for foaming, because said blowing agent is easily handled.

Said blowing agent includes a physical blowing agent and a chemical blowing agent, and said physical blowing agent may be such as an inorganic liquid or gas, such as carbon dioxide gas in its critical state, as described above, carbon dioxide gas, nitrogen gas, air, steam, water, and organic liquid or gas, such as a solvent having a low boiling point such as halogenated hydrocarbon such as dichloroethane methylene chloride, flon gas, or the like, a hydrocarbon such as pentane, hexane, heptane, cyclohyxane, octane, gasoline, or the like, an alcohol such as ethanol, propanol, or the like, an ether such as ethyl ether , methyl ethyl ether or the like, or a capsule style blowing agent, in which said solvent having a low boiling point is encasulated.

Said chemical blowing agent may be a bicarbonate such as sodium bicarbonate, ammonium bicarbonate, or the like, a nitrite, such as ammonium nitrite or the like, an azide compound, such as Ca(N₃)₂, a hydrogen compound, such as hydrogenated sodium borate, or the like, or a combination of light metals, such as Mg, Al or the like and water, acid as alkali. Said blowing agent is inorganic.

On the other hand, an organic blowing agent may be a azo compound, a hydrazine derivative, a semicarbozide compound, azide, nitroso compound, triazole compound or the like such as azodicarboamide, azobisisobutylonitorile, barium azodicarboxylate, dinitrosopentamethylenetetramine, P P'-oxybis(benzensulfonylhydrazide), paratoluenesulfonhylhydrazide, diazoaminobenzene, N-N'- dimethyl N,N'-dinitroso telephthalamide, nitrourea, acetone-P-toluene sulfonyl hydrazide, P-toluensulfonyl azide, 2,4-toluenesulfonyl hydrazide, P-methyl urethane benzenesulfonyl hydrazide, trinitrosomehyllenetriamine, P-toluenesulfouylsemicabazide, oxalyl hydrazide,nitroguanidene, hydrazicarbonamide, trihydrazinotriazine, or the like.

### (Necessary equipment for the expansion molding)

In the expansion injection molding, high pressure is exerted on the melted resin by gas produced by the thermal decomposition of the foaming agent, and said gas is dissolved in the melted resin at a high pressure, so that it is necessary to plasticize said melted resin with high rear pressure. In particular, in a case where gas in its ultracritical state is dissolved in the melted resin, or in a case where the ultracritical state is produced by the pressure and temperature, since melted resin leaks from the nozzle set at the tip of the heating cylinder of the molding machine, a shut-off nozzle is preferably used.

Said shut-off nozzle includes various types, such as a shut-off nozzle worked by oil pressure, shut-off nozzle worked by air pressure, rotary nozzle worked by oil pressure, rotary nozzle worked by air pressure, the spring system shut-off nozzle, hot runner valve gate worked by oil pressure, hot runner valve gate worked by air pressure, spring system hot runner valve gate or the like and these valves are shown in Figs. 5 to 9.

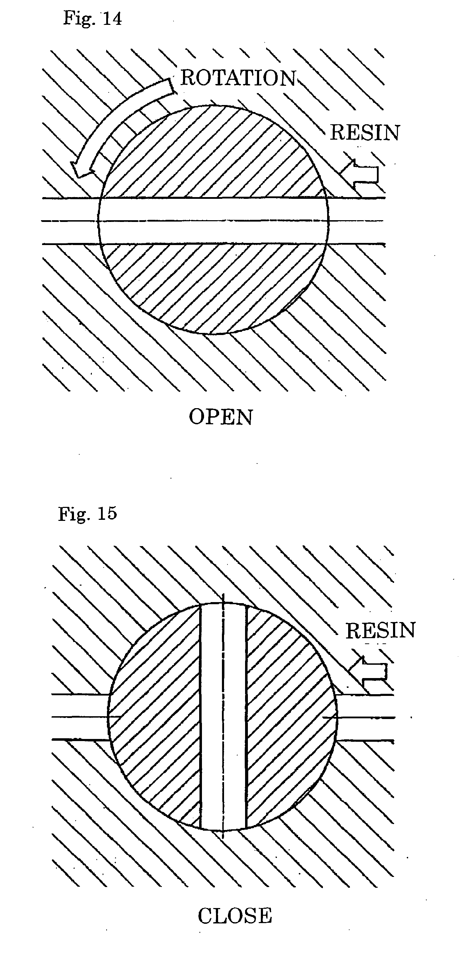

Besides these shut-off nozzles, the shutter system shut-off nozzle, whose movements are shown in Figs. 12 and 13, rotary valve system shut-off nozzle, whose movements are shown in Figs. 14 and15 can be used in the present invention.

### (Mold shrinkage)

The thermoplastic resin expands by heating and melting, and shrinks by cooling and solidifying, so that the injection mold is designed and manufactured taking into account of the probable volume of resin shrinkage. In practical injection molding, molding shrinkage rates vary according to the shape of resin molded article, temperature of the mold, and the difference between the coefficients of thermal conductivity or the like, and when the mold is manufactured, the mold is designed given the same value to the longitudinal molding shrinkage ratio (X axis direction), horizontal molding shrinkage ratio (Y axis direction), and height molding shrinkage ratio (Z axis direction). In a case where different molding shrinkage ratio values are each set in the X axis direction, Y axis direction, and Z axis direction, a problem arises in that the design and the manufacture of the mold becomes too complex. The molding shrinkage ratio in the present invention is defined as follows.

Molding shrinkage ratio (0/000) = (the real size of the mold minus the size of the molded article) / (real size of the mold)

### [EXAMPLES]

### (EXAMPLE 1)

Using a mold whose molding shrinkage ratios in its X axis direction, Y axis direction, Z axis direction can be measured and a injection molding machine, and using ABC resin (Styrac 191F: Asahi Chemical Industry Co., Ltd. natural color), HIPS resin (403: A&M Styrene Co., natural color), and a modified PPE resin (Xyron 100Z, Asahi Chemical Industry Co., Ltd. Black color) as molding materials, resin molded articles were molded using the gas assist molding method. The molding shrinkage ratios of the resulting resin molded articles are shown in Tables 2 to 4.

The molding shrinkage ratios of each resin molded article of EXAMPLE 1 are substantially the same values in X axis direction, Y axis direction, and Z axis direction, while the molding shrinkage ratios of the resin molded article of COMPARISON (solid molded article), are different, depending on the directions.

Each resin molded article was crushed and pelletized, and the resulting pellets were remolded by the gas assist molding method. In this case, the molding shrinkage ratio of the resulting resin molded article was substantially the same as that of the resin molded article using virgin resin.

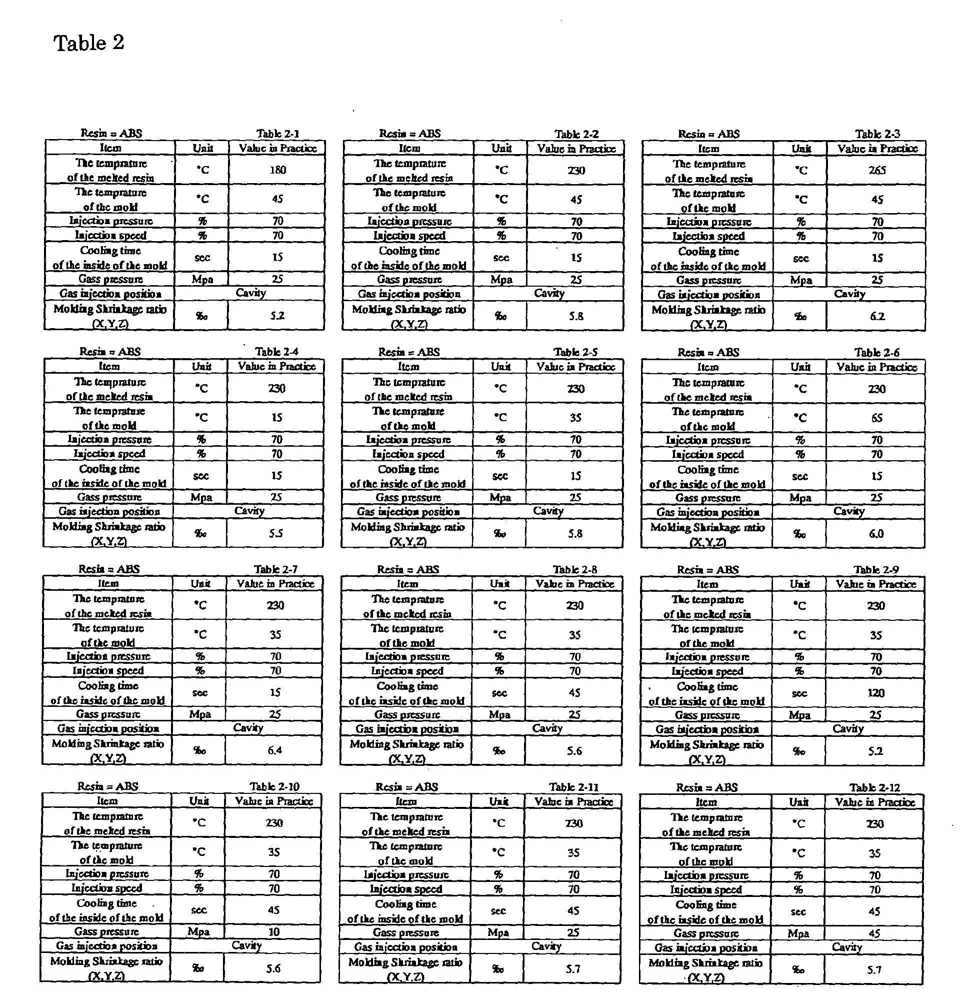

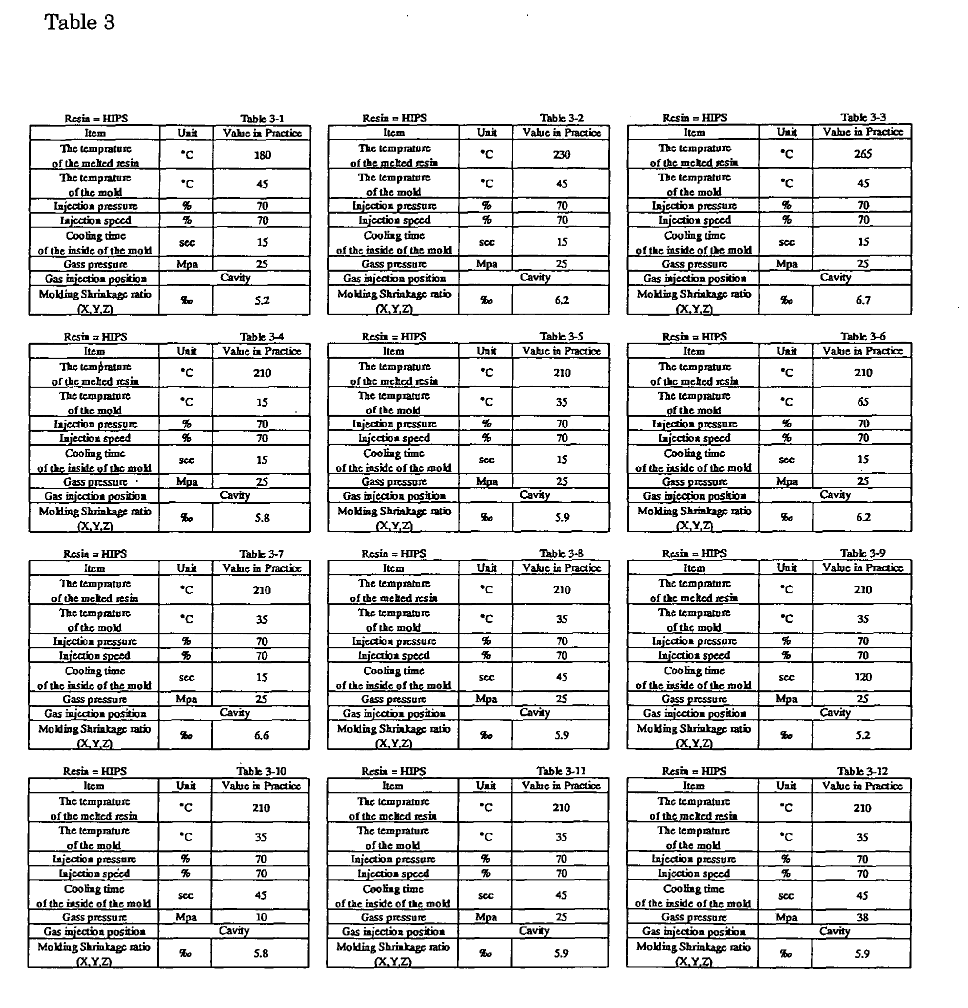

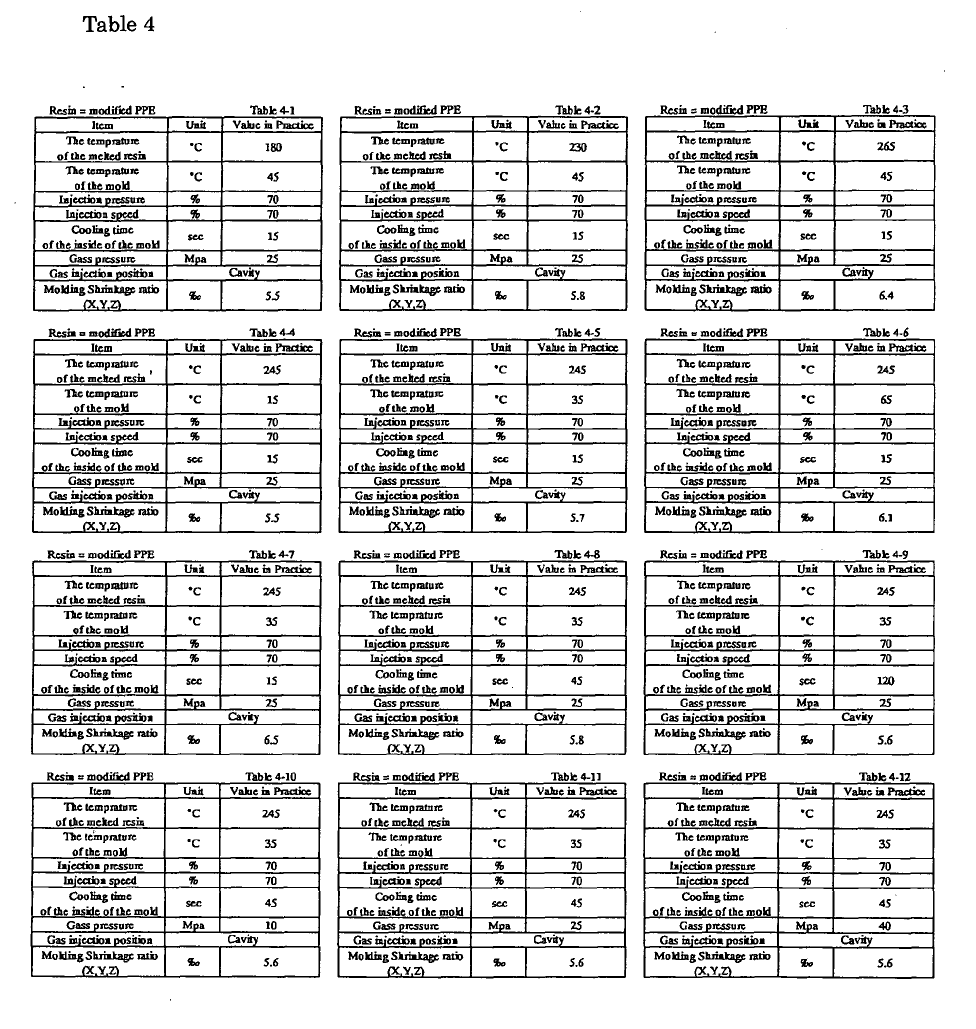

### (EXAMPLE 2)

As a chemical blowing agent, sodiumhydrogen carbonate (NaHCO₃), and azodicarbonamide (ADCA or AC) were both added to styrac 191F (natural color), polystyrene 403 R (natural color), Xyron 100 Z (black color) and Unibright 700 (natural color) in an amount of 0.3 % by weight of each resin, after which the resulting resin compounds were each molded, and the molding shrinkage ratios of each resin molded article are shown in Tables 5 to 8.

The molding shrinkage ratios of each resin molded article of EXAMPLE 2 are substantially the same value in X axis direction, Y axis direction, and Z axis direction as in EXAMPLE 1.

Each molded article was then crushed and pelletized, and the resulting pellets were again molded by the expansion molding method.

The molding shrinkage ratio of the resulting resin molded article was substantially the same as that of the resin molded article, using virgin resin.

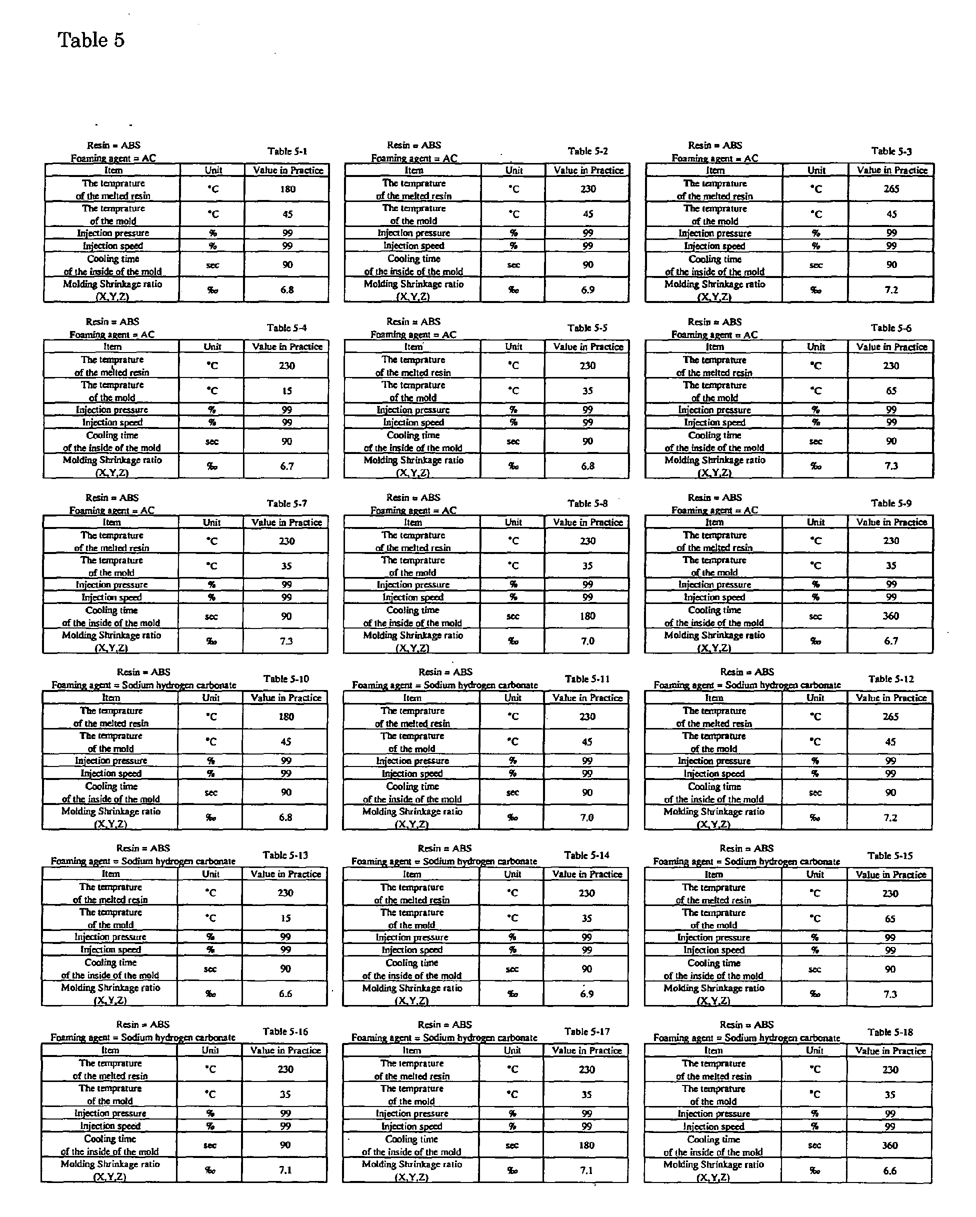

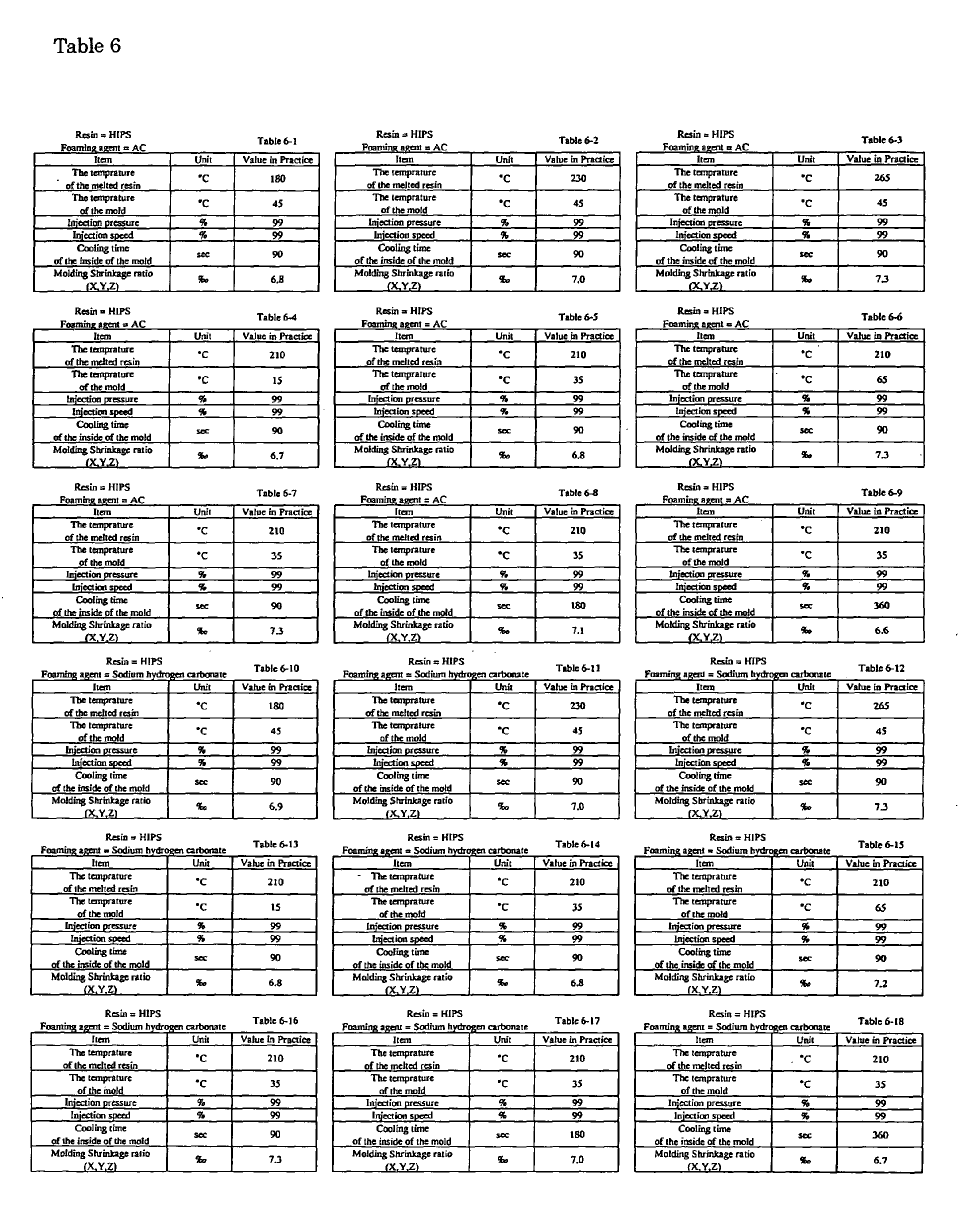

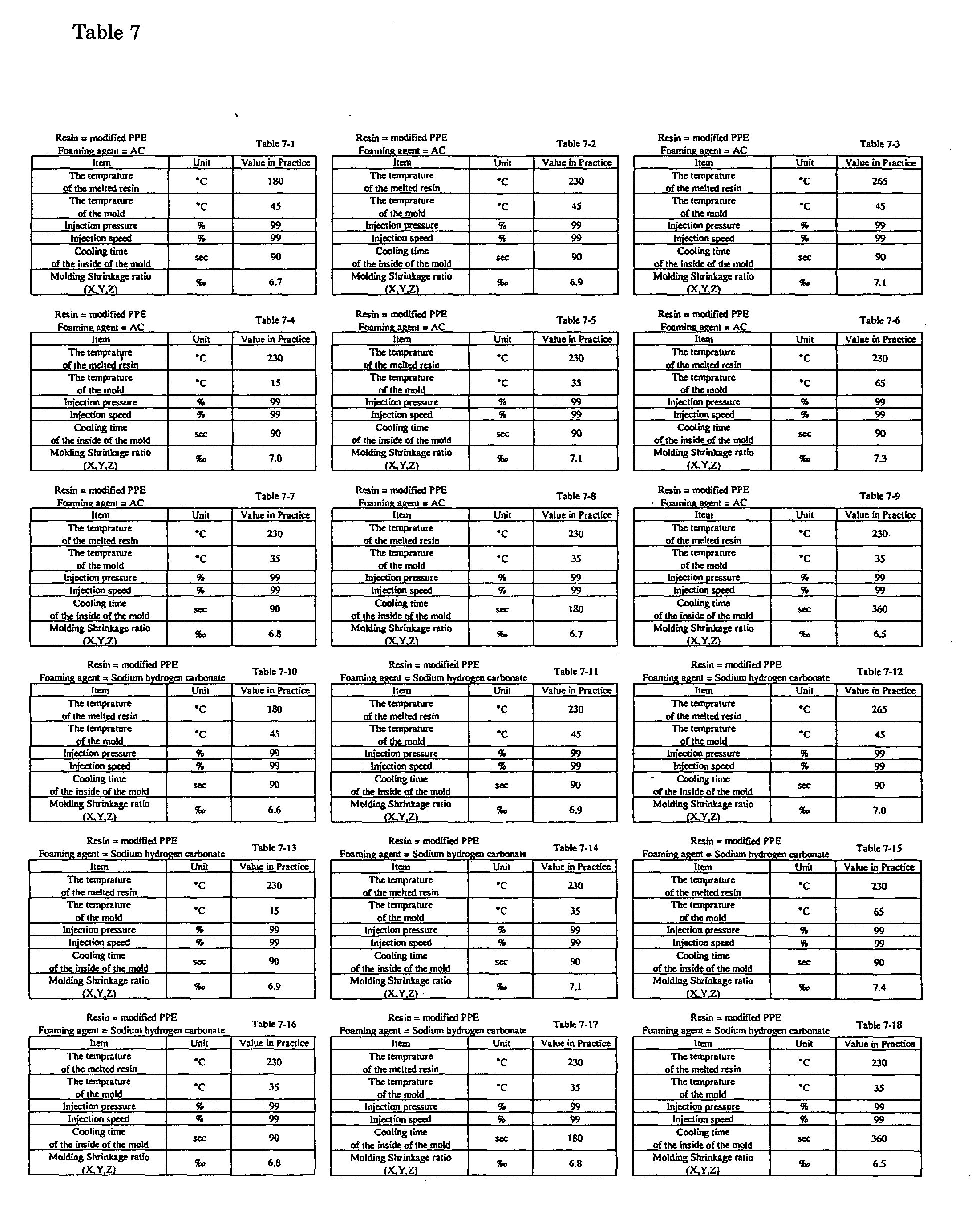

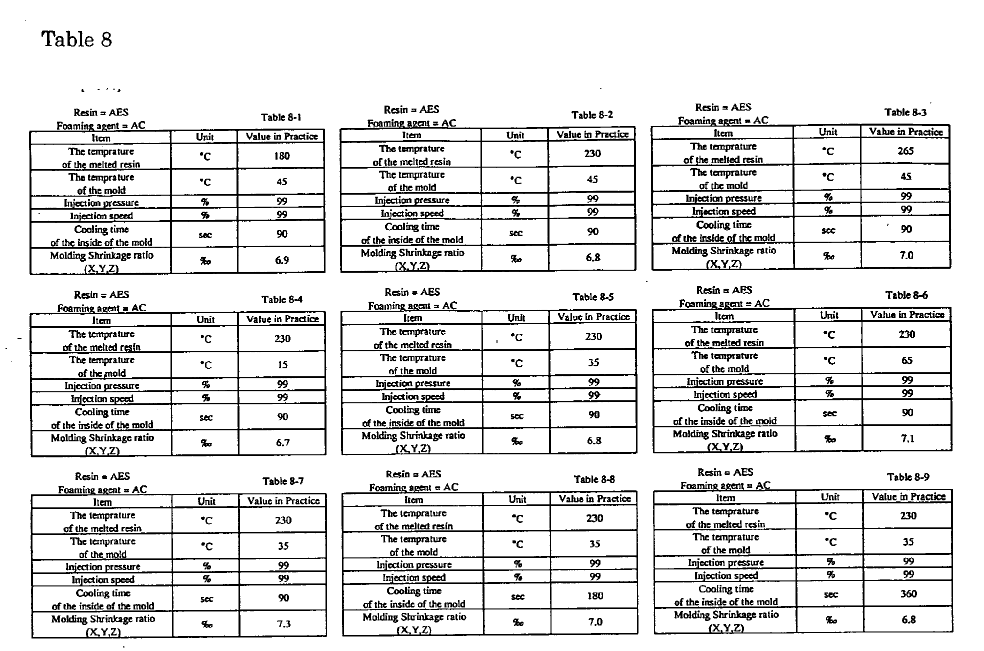

### (COMPARISON)

Using the same mold and the same injection molding machine used in EXAMPLE 1, and using a polymer alloy of PC resin and ABS resin (Cycoloy MC 5400 (natural color) GE Plastics Japan Ltd.) and resins used in EXAMPLE 1, resin molded articles were molded by the solid molding method and the molding shrinkage ratio of each resin molded article is shown in Table 9.

In the case of solid molding, the molding shrinkage ratios vary depending on axis directions, and further, even in the same direction. It seems that this variation in the molding shrinkage ratio is caused by the difference between the transmission ratio of the hold pressure depending on the melted resin, residual stress of the resin molded article, ease of shrinkage, the shape of the resin molded article, or the like.

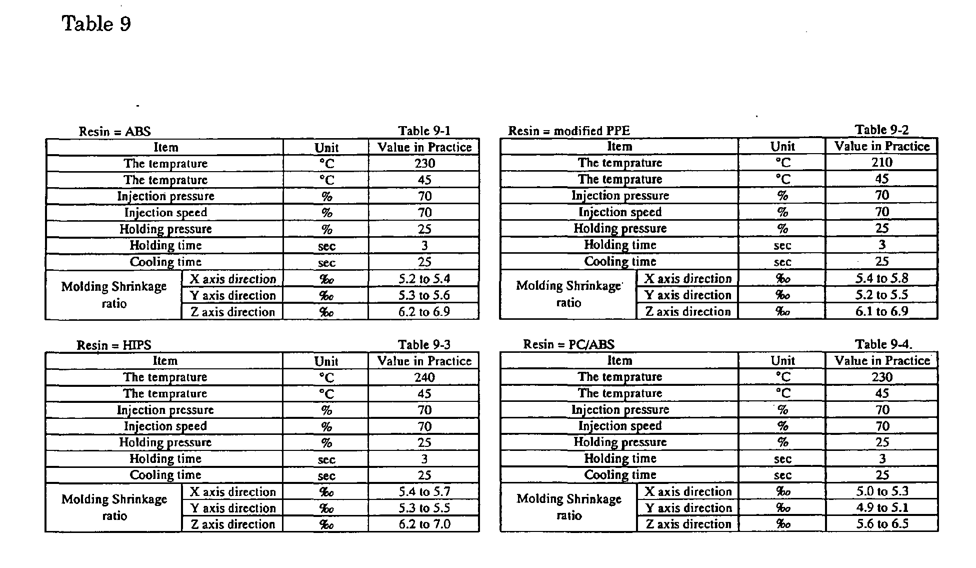

### (EXAMPLE 3)

Using the polymer alloy of PC resin and ABS resin (Cycoloy MC 5400 (natural color)GE Plastics Japan Ltd.) used in COMPARISON, resin articles were molded by the gas assist molding method, and the molding shrinkage ratios are shown in Table 10.

In the case of EXAMPLE 3, the molding shrinkage ratios are substantially the same in X axis direction, Y axis direction, and Z axis direction.

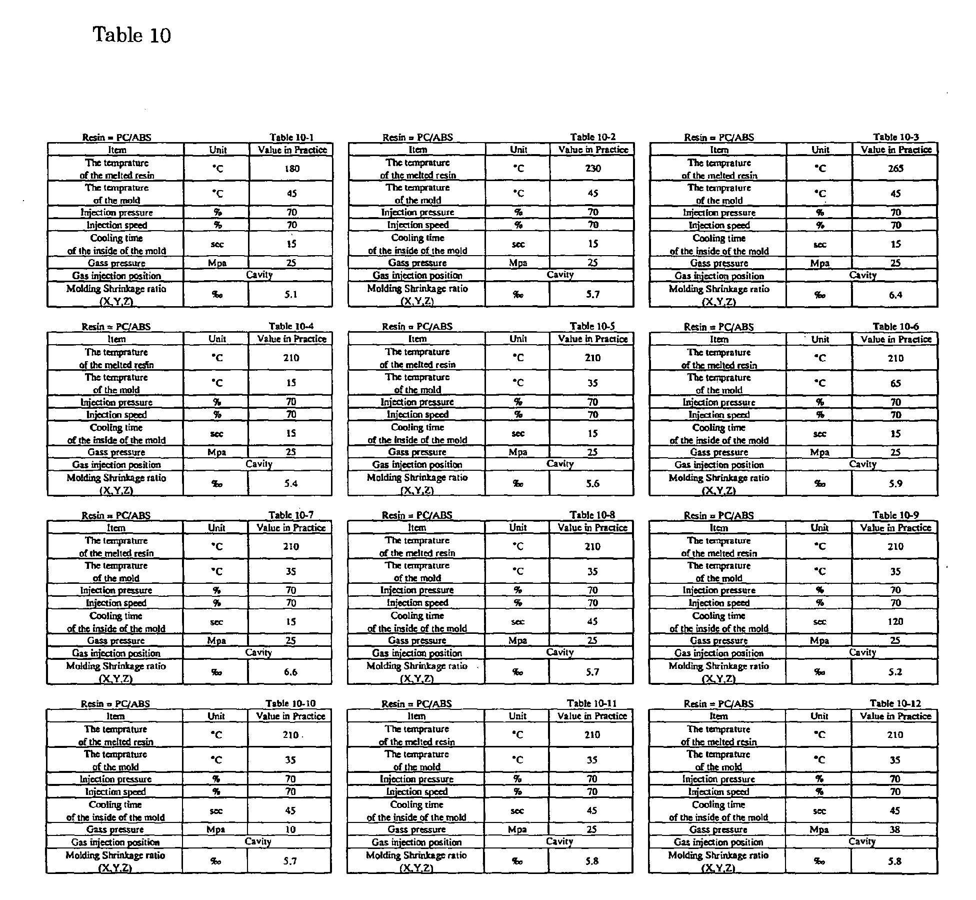

### (EXAMPLE 4)

Using a mold whose molding shrinkage ratios in X axis direction, Y axis direction, and Z axis direction can be measured and an injection molding machine, and using a pellet produced by crushing a resin molded article made of Styrac 191 F (natural color), a pellet produced by crushing a resin molded article made of polystyrene 403 R (natural color), and a pellet produced by crushing a resin molded article made of Xyron 100Z (black color), articles were molded by the gas assist molding method. The molding shrinkage ratio of the resulting molded articles are shown in Table 11. The molding shrinkage ratios in EXAMPLE 4 have substantially the same values in X axis direction, in Y axis direction and in Z axis direction while the molding shrinkage ratios vary depending on direction in the case of a solid molded article.

### (COMPARISON)

As described above, it is recognized that the molding shrinkage ratio of an article made of a recycle resin is substantially the same as that of a molded article made of a virgin resin.

In this EXAMPLE, articles were again molded using pellets produced by the crushing of a defective molded article, and the same results may be obtained in a case where a sprue·runner produced during molding is used.

Further, in a case where a scrapped molded article collected in the market is crushed, pelletized, and remolded, the same results may be obtained.

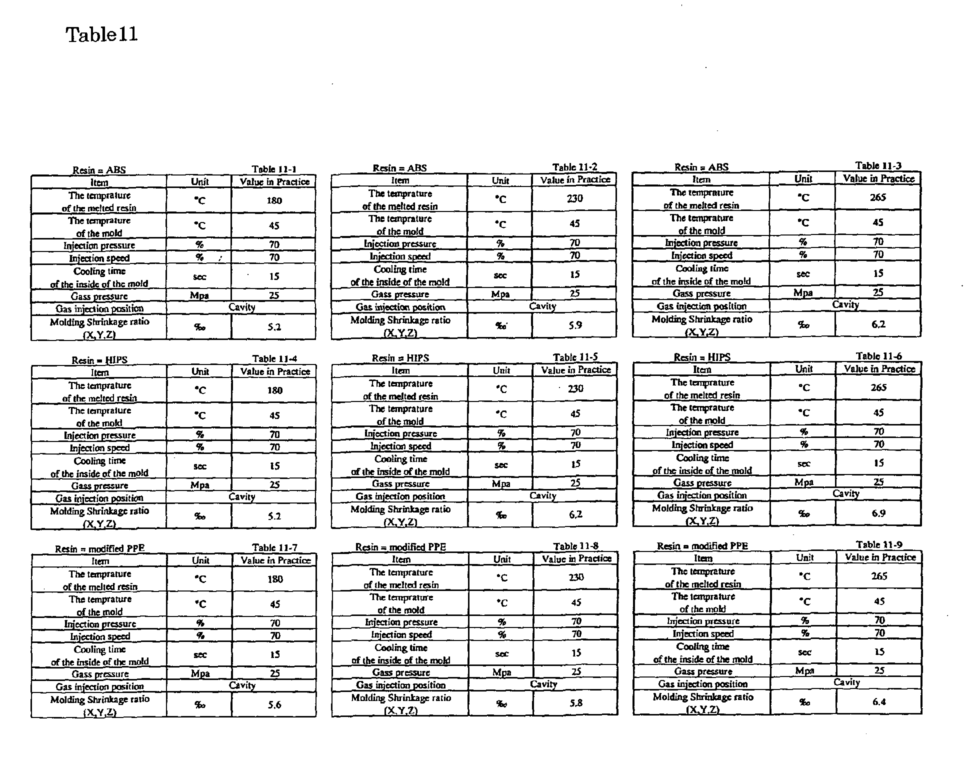

### (EXAMPLE 5)

An article was molded using Styrac, 191 and then crushed and pelletized to obtain a recycle resin material. The physical property (Izod impact strength) of said recycle resin material was determined, confirming that the impact strength degrades to 85 assuming, from a virgin resin impact strength of 100. To recover this physical property, an acrylonitrile-styrene terpolymer containing a butadiene rubber (BR) [ a butadiene rubber to which acrylonitrile and styrene are graft copolymerized (-g-) (AnSt-g-BR) [an acrylonitrile-styrene terpolymer containing an olefinic rubber (EPDM D (diene)=DCP) [olefinic rubber to which acrylonitorile and styrene are graft copolymerized (An St-g-EPDM)], an acrylonitrile-styrene terpolymer containing a copolymer of an acrylic ester and butadiene a butadiene rubber to which acrylonitrile and atyrene are graft copolymerized (An St-g-AR)] were each added to said recycle resin material, as the recycle aid agent, in an amount of 5% by weight. St-g-BR, St-g-EPDM, a thermoplastic elastomer [Perprene P-150 B (Trade name and grade): Toyobo Co., Ltd.] were each added to the recycle resin material HIPS [A&M polystyrene 403R (Trade name)] in an amount of 5% by weight, to similarly recover its physical properties. As shown in Table 12, the molding shrinkage ratios in X axis direction, Y axis direction and Z axis direction are substantially the same values as described in EXAMPLES.

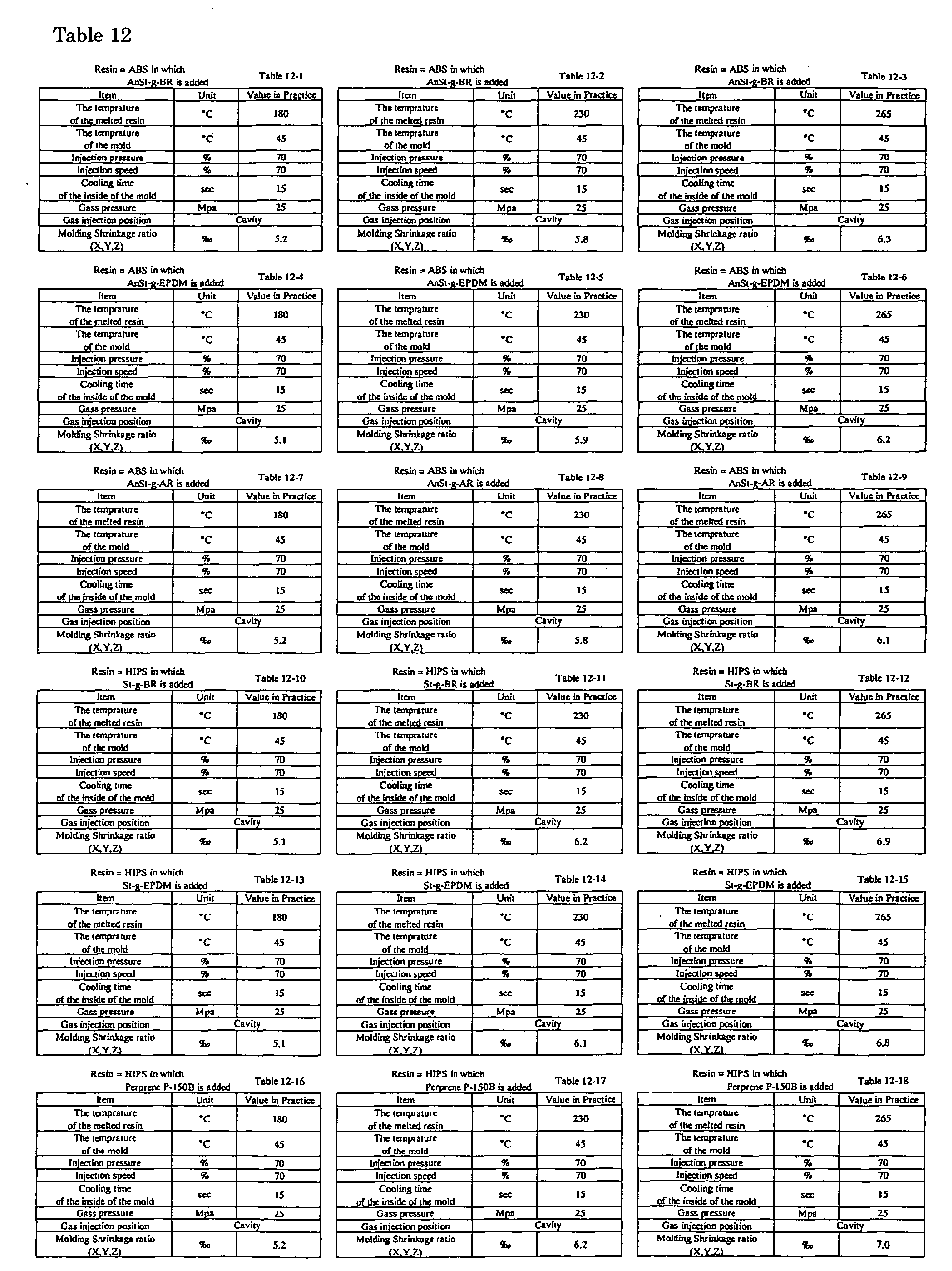

### (EXAMPLE 6)

A foamed polystyrene, collected in the market, was dissolved in a solvent mixture of toluene and n-butanone (1:1) after which the contaminants were removed by filteration, and then said solvent was evaporated to obtain PS bulk. Said PS bulk was crushed, and 30% by weight of a polyphenylene ether (PPE), a phosphorous antiflame agent, a metal hydroxide (antiflame auxiliary agent) and St-g-BR, St-g -EPDM and Perprene P150 B, each in an amount of 18% by weight were added to said crushed PS bulk, to improve the resin's inproperties.

The resulting molding materials were each molded by the gas assist method and the molding shrinkage ratio of each molded article is shown in Table 13. It is recognized that the molding shrinkage ratios are substantially the same as shown in Table 11.

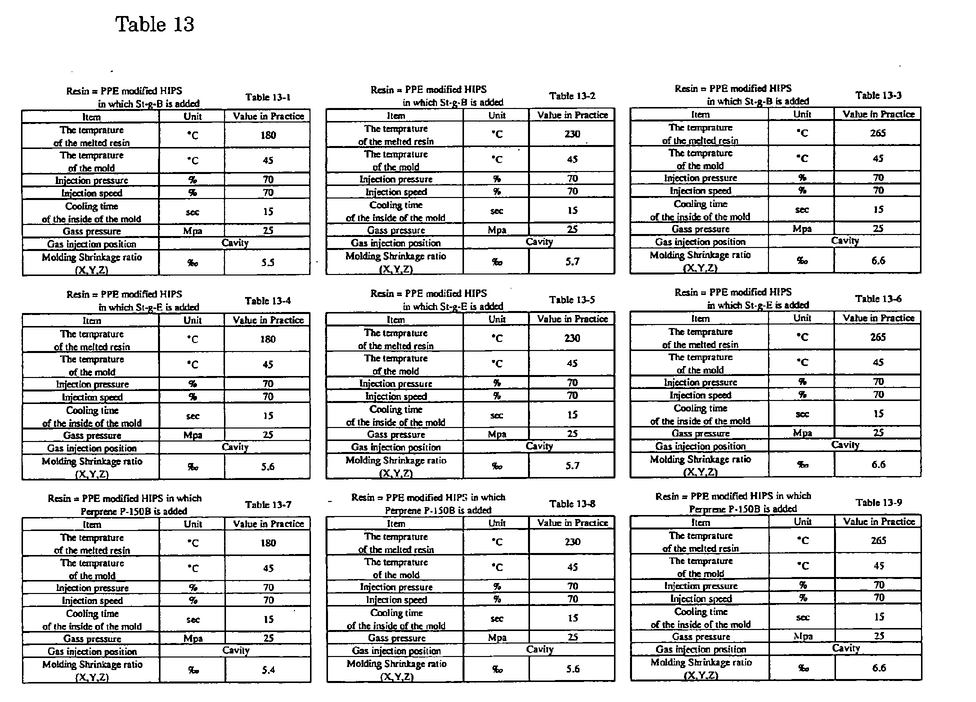

### (EXAMPLE 7)

Said molded articles of ABS (Styrac 191) and HIPS (A&M Polystyrene 403R) in EXAMPLE 4 were each coated with a paint whose vehicle is a styrenic acrylic resin and cellulose acetate butylate having compatibility with ABS and HIPS, after which said molded articles with the paint films were each crushed and pelletized. The resulting pellets in which said paint films were mixed were then molded by the gas assist molding method. The molding shrinkage ratios of the resulting molded articles are shown in Table 14. Compared with the results in Table 11, the molding shrinkage ratio of said molded articles is substantially the same as that in Table 11.

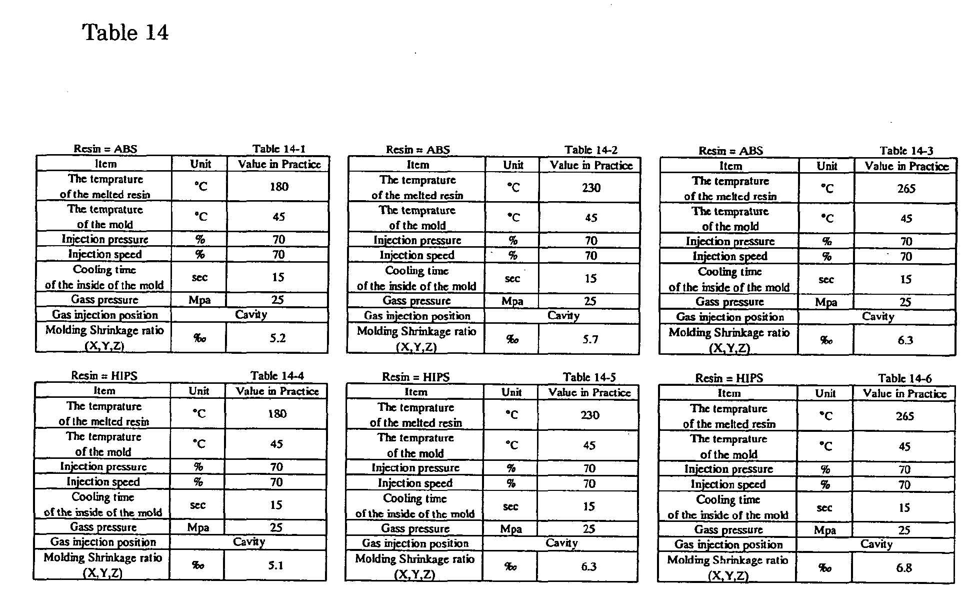

### (EXAMPLE 8)

Using virgin PP (Norprene AH661 (natural color), Sumitomo Chemical Co., Ltd.) articles were molded by the solid molding and gas assist molding methods and the molding shrinkage ratios of both molded articles by the solid molding and gas assist molding are substantially the same, at 14 to 16%, while the molding shrinkage ratios of the article created by the gas assist molding are substantially the same in its X, Y, and Z axes with few differences between said molding shrinkage ratio. Said PP molded article was crushed and pelletized, and the resulting pellets were molded by the gas assist molding method. The molding shrinkage ratio of the resulting molded article was substantially the same as that of the virgin gas assist molded article. In a case where an olefinic rubber (Engage (Trade Name): Du Pont Dow Elastomer Co. U.S.) was added to both the virgin resin and the recycle resin in an amount of 2% by weight, the molding shrinkage ratios of said virgin resin and said recycle resin were both substantially the same. Using virgin and recycle PC (Lexan 241R (natural color), GE Plastics Japan Ltd. ), articles were molded by the gas assist molding method, and the mold shrinkage ratios of the virgin molded article and the recycle molded article vary little from each other at 4.8% respectively.

The EMBODIMENTS and EXAMPLES described above are made as an illustration, and the present invention should not be limited by them with alteration and addition being possible in as far as these do not counter the technical idea of the present invention, which can be confirmed by the expert from the description in CLAIMS, DESCRIPTION OF INVENTION and DRAWINGS.

### POSSIBILITY OF INDUSTRIAL USE

In the solid molded article, internal stress is relaxed and size changes or deformation occurs over the course of time while in the hollow molded article and the foamed molded article, the internal stress is absorbed in the hollow part or foam cell, so that a resin molded article having a little internal stress is obtained.

As a result of this difference from the solid molded article, and since the internal stress is relaxed over the course of time, little size change and deformation occur.

Further, since the same values of the molding shrinkage in X direction, Y direction, Z direction can be applied, the design and manufacture of the mold is made easier and less expensive. Still further, since the molding shrinkage ratio of the resin molded article varies little, a highly accurate resin molded article which changes little with time can be manufactured.

## Claims

1. A method for manufacturing a resin molded article made of an acrylonitrile-butadiene-styrene copolymer, or a polymer alloy or polymer blend containing said acrylonitrile-butadiene-styrene copolymer, comprising; the preparation of a mold whose cavity is designed to set the X direction, Y direction, and Z direction molding shrinkage ratios of said resin molded article to be the same value each into a range of between 4.5/1000 and 6.6/1000, the injecting of said acrylonitrile-butadiene-styrene copolymer, or said polymer alloy or polymer blend containing said acrylonitrile-butadiene-styrene copolymer, into said mold cavity, said copolymer, or said polymer alloy or polymer blend, being melted by heating at a temperature higher than 160°C, and then the injecting of a fluid at a pressure higher than the atmospheric pressure during, or after the injection of said copolymer, or said polymer alloy or polymer blend.

2. A method for manufacturing a resin molded article made of a high impact polystyrene, which is a polymer blend of a styrene graft butadiene copolymer, and a styrenic polymer, or a polymer alloy or polymer blend containing said high impact polystyrene comprising; the preparation of a mold whose cavity is designed to set the X direction, Y direction, and Z direction molding shrinkage ratios of said resin molded article to be the same value each into a range of between 4.5/1000 and 6.7/1000, the injecting of said high impact polystyrene; or said polymer alloy or polymer blend containing said high impact polystyrene, into said mold cavity, said high impact polystyrene, or said polymer alloy or polymer blend containing said high impact polystyrene, being melted by heating at a temperature higher than 160°C, and then the injecting of a fluid at a pressure higher than the atmospheric pressure during, or after the injection of said high impact polystyrene, or said polymer alloy or polymer blend containing said high impact polystyrene.

3. A method for manufacturing a resin molded article made of a modified polyphenylene ether, or a polymer alloy or polymer blend containing said modified polyphenylene ether, comprising; the preparation of a mold whose cavity is designed to set the X direction, Y direction, and Z direction molding shrinkage ratios of said resin molded article to be the same value each into a range of between 4.5/1000 and 6.5/1000, the injecting of said modified polyphenylene ether, or said polymer alloy or polymer blend containing said modified polyphenylene ether, into said mold cavity, said modified polyphenylene ether, or said polymer alloy or polymer blend containing said modified polyphenylene ether, being melted by heating at a temperature higher than 175°C, and then the injecting of a fluid at a pressure higher than the atmospheric pressure during, or after the injection of said modified polypherylene ether, or said polymer alloy or polymer blend containing said modified polyphenylene ether.

4. A method for manufacturing a resin molded article made of a polymer alloy or polymer blend containing a polycarbonic ester derived from an aromatic dihydroxy compound and polystyrenic resin, comprising, the preparation of a mold whose cavity is designed to set the X direction, Y direction, and Z direction molding shrinkage ratios of said resin molded article to be the same value each into a range of between 4.5/1000 and 6.5/1000, the injecting of said polymer alloy or polymer blend containing said polycarbonic ester derived from said aromatic dihydroxy compound and polystyrenic resin, said polymer alloy or polymer, blend being melted by heating at a temperature higher than 175°C, and then the injecting of a fluid at a pressure higher than the atmospheric pressure during, or after the injection of said polymer alloy or polymer blend.

5. A method for manufacturing a resin molded article in accordance with Claim 4, said styrenic resin is
A: A copolymer of vinyl cyanide and styrenic monomer containing a graft rubber in which a graft copolymer of vinyl cyanide and styrenic monomer containing dienic rubber and/or acrylic rubber and/or olefinic rubber is (are) compounded.
B: A graft copolymer of a styrenic polymer and a styrenic monomer containing a dienic rubber and/or an acrylic rubber and/or an olefinic rubber.
C: A copolymer of a styrenic monomer in which a graft copolymer of a dienic rubber and/or an acrylic rubber and/or definic rubber and a styrenic monomer is(are) compounded.

6. A method for manufacturing a resin molded article in accordance with Claims 1 to 5, wherein said fluid is injected into said mold cavity from the injecting nozzle of an injection molding machine.

7. A method for manufacturing a resin molded article in accordance with Claims 1 to 5, wherein said fluid is injected into said molded article by using one or more injecting needle(s) and/or injecting nozzle(s) through a sprue runner.

8. A method for manufacturing a resin molded article in accordance with Claims 1 to 5, wherein said fluid is directly injected into said molded article by using one or more injecting needle(s) and/or injecting nozzle(s).

9. A method for manufacturing a resin molded article made of an acrylonitrile-butadiene-styrene copolymer, or a polymer alloy or polymer blend containing said acrylonitrile-butadiene-styrene copolymer, comprising; the preparation of a mold whose cavity is designed to set the X direction, Y direction, and Z direction molding shrinkage ratios of said resin molded article to be the same value each into a range of between 5.5/1000 and 7.5/1000, and the injecting of said acrylonitrile-butadiene-styrene copolymer, or said polymer alloy or polymer blend containing said acrylonitrile-butadiene-styrene copolymer, into said mold cavity, said copolymer, or said polymer alloy or polymer blend, containing a blowing agent in an amount of less than 5% by weight, and being melted by heating at a temperature higher than 160°C.

10. A method for manufacturing a resin molded article made of a high impact polystyrene which is a polymer blend of a styrene graft butadiene copolymer and a styrenic polymer, or a polymer alloy or polymer blend containing said high impact polystyrene, comprising; the preparation of a mold whose cavity is designed to set the X direction, Y direction, and Z direction molding shrinkage ratios of said resin molded article to be the same value each into a range of between 5.5/1000 and 7.3/1000, and the injecting of said high impact polystyrene, or said polymer alloy or polymer blend containing said high impact polystyrene, into said mold cavity, said high impact polystyrene, or said polymer alloy or polymer blend, containing a blowing agent in an amount of less than 5% by weight, and being melted by heating at a temperature higher than 160°C.

11. A method for manufacturing a resin molded article made of a modified polyphenylene ether, or a polymer alloy or polymer blend containing said polyphenylene ether, comprising; the preparation of a mold whose cavity is designed to set the X direction, Y direction, and Z direction molding shrinkage ratios of said resin molded article to be the same value each into a range of between 5.5/1000 and 7.5/1000, and the injecting of said modified polyphenylene ether, or said polymer alloy or polymer blend containing said modified polyphenylene ether into said mold cavity, said modified polyphenylene ether, or said polymer alloy or polymer blend, containing a blowing agent in an amount of less than 5% by weight, and being melted by heating at a temperature higher than 175°C.

12. A method for manufacturing a resin molded article in accordance with Claims 1 to 11, wherein said resin being injection molded is a recycled resin or a mixture of a virgin resin and a recycled resin in which said recycled resin is contained in an amount of more than 1% by weight.
